# FASCICULE DE BREVET EUROPEEN

(11) **EP 3 259 834 B1**
(45) Date de publication et mention de la délivrance du brevet: **08.09.2021**
(21) Numéro de dépôt: 16714467.4
(22) Date de dépôt: 15.02.2016
(51) Int. Cl.: H02K 9/06, F16H 7/08, F02B 67/06, H02K 5/173, H02K 7/10, H02K 5/20, H02K 5/26

(54) **MACHINE ÉLECTRIQUE TOURNANTE DOTÉE D'UNE POULIE DE RÉCEPTION D'UNE COURROIE ET D'UN DISPOSITIF DE RÉGLAGE DE LA TENSION DE LA COURROIE**
DREHENDE ELEKTRISCHE MASCHINE MIT ANTRIEBSRIEMEN, RIEMENSCHEIBE UND RIEMENSPANNUNGEINSTELLVORRICHTUNG
A ROTATING ELECTRIC MACHINE WITH DRIVE BELT, PULLEY AND BELT TENSION ADJUSTER

(30) Priorité: 16.02.2015 FR 1551265
(43) Date de publication de la demande: 27.12.2017
(73) Titulaire: Valeo Equipements Electriques Moteur, 94046 Créteil Cedex (FR)
(72) Inventeur: BEN-OMRANE, Ryadh, CS 94046 Créteil Cedex (FR); MONTEIL, Christophe, CS 94046 Créteil Cedex (FR); ROULEAU, Blaise, CS 94046 Créteil Cedex (FR)
(86) Numéro de dépôt international: PCT/FR2016/050336
(87) Numéro de publication internationale: WO 2016/132054

(56) Documents cités:
- EP-A2- 2 128 489
- EP-A2- 2 557 295
- WO-A1-2005/124123
- DE-A1-102013 005 884
- DE-U1- 29 714 275
- FR-A1- 2 991 420
- US-A1- 2013 079 185
- US-A1- 2014 342 862
- US-B1- 6 648 783

## Description

### Domaine de l'invention

La présente invention concerne une machine électrique tournante dotée d'une poulie de réception d'une courroie et d'un dispositif de réglage de la tension de la courroie.
La machine électrique tournante pourra être un moteur électrique, un démarreur à courroie, un alternateur ou un alternateur réversible appelée alterno-démarreur fonctionnant en mode moteur électrique notamment pour démarrer le moteur thermique d'un véhicule automobile.

### Etat de la technique

Une telle machine à dispositif de réglage de la tension de la courroie est décrite par exemple dans les brevets AT130902B et EP 0 459 894 auxquels on se reportera pour plus de précisions.

Les documents WO 2005/124123, DE 102013005884, EP 2128489, EP 2557295, DE 29714275, FR 2991420 et US 6648783 décrivent des exemples de machines électriques tournantes.

La machine électrique tournante pourra être un moteur électrique comme dans le brevet AT13 902B. Comme visible à la figure 1 similaire à celle du brevet AT130902B, cette machine 1 comporte un dispositif de réglage de la tension de la courroie comportant un bras de réglage 10' pivotant autour d'un nez doté d'un pivot solidaire d'un flasque avant 2' appartenant à un carter de la machine et portant un galet 9' de tension de la courroie pénétrant dans une poulie (non référencée) solidaire de l'extrémité (non visible) d'un arbre de rotor de la machine, qui ainsi qu'on le sait est solidaire d'un rotor. Le carter et donc le flasque avant 2' est, de manière connue, conformé pour être fixé sur une partie fixe. Ce flasque 2' constitue un flasque de support pour le dispositif de réglage de la tension de la courroie.
Plus précisément le flasque 2' porte un bras d'appui 7' pour un ressort de traction 8' relié au bras 10' avec présence d'un écrou de réglage 12' de la tension du ressort 8'. Dans cette réalisation le flasque 2' présente une butée 3' de réception d'un nez 5' d'un bras 6' dont l'extrémité supérieure 7' sert d'appui au ressort 8' exerçant une force sur l'extrémité 7'.

La machine électrique tournante pourra être un alternateur comme décrit dans le brevet EP 0 459 894 , qui décrit également une machine électrique tournante dotée d'une poulie (non visible) de réception d'une courroie et d'un dispositif de réglage de la tension de la courroie comportant un galet tendeur, un bras de réglage mobile en rotation par rapport à un flasque d'extrémité avant de l'alternateur destiné à être fixé sur le bloc moteur d'un véhicule automobile et des moyens de maintien et/ou de réglage de la tension de la courroie. Les moyens de réglage de la tension de la courroie consistent dans un mode de réalisation en un ressort spiral intégré au flasque avant et au bras de réglage, ledit ressort exerçant une force de déplacement sur le galet tendeur pour une tension optimale de la courroie. En variante les moyens de réglage comportent un secteur denté ménagé sur le bras de réglage et destiné à coopérer avec un secteur denté de forme complémentaire solidaire du flasque avant de la machine électrique. Les secteurs dentés consistent dans une autre forme de réalisation en des crémaillères. Le flasque avant comporte une équerre doté de trous pour sa fixation à l'aide de moyens de fixation, tels que des vis, sur le bloc moteur du véhicule automobile. Ce flasque constitue également un flasque de support du dispositif de réglage de la tension de la courroie. Le galet tendeur est monté rotatif sur le bras avantageusement à la faveur d'un roulement à billes intercalé radialement entre la périphérie interne du galet et un pivot, un boulon dans cette réalisation, solidaire du flasque avant comme décrit et visible par exemple dans la figure 2 de ce brevet EP 0 459 894.

Dans tous les cas, grâce au dispositif de réglage de la tension de la courroie on obtient une tension optimale de la courroie, on évite un glissement de la courroie et on filtre les vibrations qui peuvent nuire au bon fonctionnement de la machine électrique tournante, sachant que ces vibrations peuvent casser les saillies de fixation, telles que des oreilles ou des pattes ou des platines, que présente le carter à flasque avant d'une machine électrique pour sa fixation sur une partie fixe, telle que le bloc moteur d'un véhicule automobile.

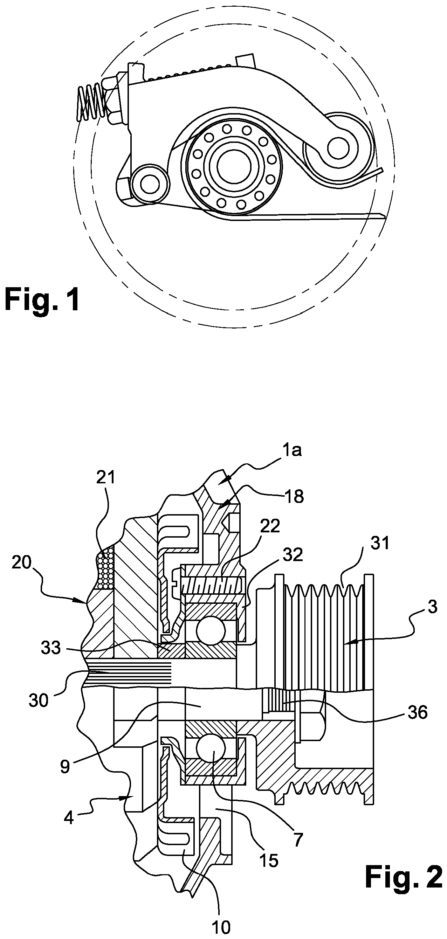

La courroie pourra être de forme plate, de section trapézoïdale ou consister en une courroie poly-V (marque déposée), la transmission de mouvement entre la courroie souple et la poulie se faisant dans un mode de réalisation par adhérence.
La poulie pourra être métallique en étant par exemple en acier ou en aluminium par exemple anodisé. En variante la poulie est en matière plastique renforcée par des fibres et/ou des charges pour diminution des bruits. Cette poulie comporte une gorge complémentaire à la forme de la courroie pour réception de celle -ci. La poulie, lorsqu'elle est métallique, pourra être revêtue localement de matière plastique notamment au niveau de sa gorge.
La gorge de la courroie pourra comporter une gorge à flancs parallèle et fond lisse pour réception d'une courroie plate. En variante la gorge de la poulie pourra être de forme trapézoïdale pour réception d'une courroie à section trapézoïdale transmettant plus de couple qu'une courroie plate. En variante la poulie pourra comporter à un fond doté de sillons pour réception des dents d'une courroie poly-V (marque déposée) striée dans le sens de la longueur. La partie inférieure de la courroie est dans tous les cas destinée à coopérer avec le fond de la gorge de la poulie tandis que la partie supérieure de la courroie est destinée à coopérer avec le galet tendeur (voir figure 1).

De manière connue, la courroie est souple et comporte un corps de base en élastomère renforcé par des fibres et une armature de force composée de câbles tels que des câbles en polyester. Cette courroie est appelée courroie caoutchoutée. La composition du corps de base en élastomère, appelé gomme de base, dépend des différents producteurs de courroie.
Ainsi une courroie de section trapézoïdale comporte par exemple une partie supérieure comprenant un tissu croisé, une armature textile de force composée par exemple de câbles polyester, un corps de base en élastomère appartenant à la partie inférieure de la courroie renforcé par des fibres transversales résistantes à l'abrasion, d'une gomme par exemple en polychloroprène résistant aux huiles et assurant l'adhérence statique et dynamique avec l'armature textile. Avantageusement la partie intérieure de la courroie est dotée de crans pour augmenter la flexibilité de la courroie et limiter l'échauffement.
Une courroie poly-V diffère d'une courroie trapézoïdale par le fait que son corps de base est doté de stries dans le sens de la longueur avec des dents de section triangulaire appartenant à la partie inférieure de la courroie. Les sillons du fond de la gorge de la poulie sont prévus pour recevoir de manière complémentaire les dents de la courroie.
De manière connue les courroies poly-V sont plus avantageuses que les courroies de section trapézoïdale car :
- elles sont plus souples ce qui permet une utilisation sur des poulies de plus faible diamètre ;
- elles permettent une adhérence optimale sur toute la surface de la poulie et une répartition homogène de la pression de contact entre la courroie et la poulie ;
- elles autorisent des rapports de transmission de mouvement plus élevés ;
- une seule courroie est suffisante pour, par exemple, à partir de la poulie du vilebrequin d'un moteur thermique d'un véhicule automobile, entraîner l'alternateur du véhicule automobile et un autre accessoire du véhicule automobile, tel que le ventilateur ou le compresseur de climatisation de celui-ci.

En variante la poulie comporte une gorge avec un fond formant un engrenage pour réception de crans complémentaire que comporte le corps base en élastomère de la courroie à tissu et armature textile de force à câble. La transmission de force est alors réalisée dans ce mode de réalisation par adhérence et engrènement.

Une machine électrique tournante conventionnelle comprend un carter sur lequel est monté d'une part, un stator et d'autre part, centralement à la faveur de moyens de palier, tels que des roulements à billes à une ou deux rangées de billes, un arbre de rotor rotatif. L'arbre est solidaire d'un rotor tournant à l'intérieur du stator. La poulie est montée à l'extérieur du carter et ce à l'une des extrémités, dite extrémité avant, de l'arbre par exemple par vissage. Le carter est conformé pour être fixé sur une partie fixe et comprend au moins un flasque avant adjacent à la poulie et un flasque arrière le plus éloignée de la poulie. Ces flasques sont appelées respectivement palier avant et palier arrière. L'arbre traverse les paliers.
Dans le cas d'un moteur électrique le stator est un stator inducteur et le rotor un rotor induit. Dans le cas d'un alternateur, notamment pour un véhicule à moteur thermique, le stator est un stator induit et le rotor un rotor inducteur.
Ainsi qu'on le sait le rotor pourra être un rotor à griffes, un rotor à pôles saillant bobiné ou un rotor à aimants permanents implantés radialement et/ ou de manière axiale dans le corps du rotor comprenant un paquet de tôles. Le rotor à griffes ou le rotor à pôles saillants pourront être dotés d'aimants permanents pour notamment augmenter la puissance de la machine électrique tournante.

Le stator pourra comporter, pour diminuer les effets des courants de Foucault, un corps sous la forme d'un paquet de tôles portant un bobinage de stator s'étendant de part et d'autre du corps de stator comprenant des enroulements de fils continus ou en forme de barres. Le corps du stator est de longueur axiale inférieure ou égale à celle du rotor. L'axe de l'arbre de rotor constitue l'axe de rotation de la machine électrique et l'axe de symétrie axiale du rotor et du corps du stator constituant deux parties coaxiales. Un entrefer existe entre la périphérie interne du corps du stator et la périphérie externe du corps du rotor
La machine électrique pourra être du type polyphasé comprenant au moins trois phases.
Un pont redresseur ou un onduleur pourra être associé au bobinage du stator pour notamment transformer le courant induit alternatif produit par le stator en courant continu afin d'alimenter les consommateurs du véhicule automobile et/ou de recharger la batterie du véhicule

Le palier avant est avantageusement ajouré pour circulation de l'air et refroidissement de la machine électrique.

Pour mémoire on fera référence par exemple au document FR 2 739 734 décrivant une machine électrique tournante sous la forme d'un alternateur visible à la figure 2, qui est une vue en coupe d'un alternateur conventionnel identique à la figure 1 du document FR 2 739 734. Une telle machine pourra comporter un carter la, 1b conformé pour être fixé sur une partie fixe et comprenant au moins deux flasques appelés respectivement palier avant la et palier arrière 1b avantageusement en aluminium, sachant que l'avant et l'arrière correspondent à une orientation de gauche à droite dans cette figure 2.

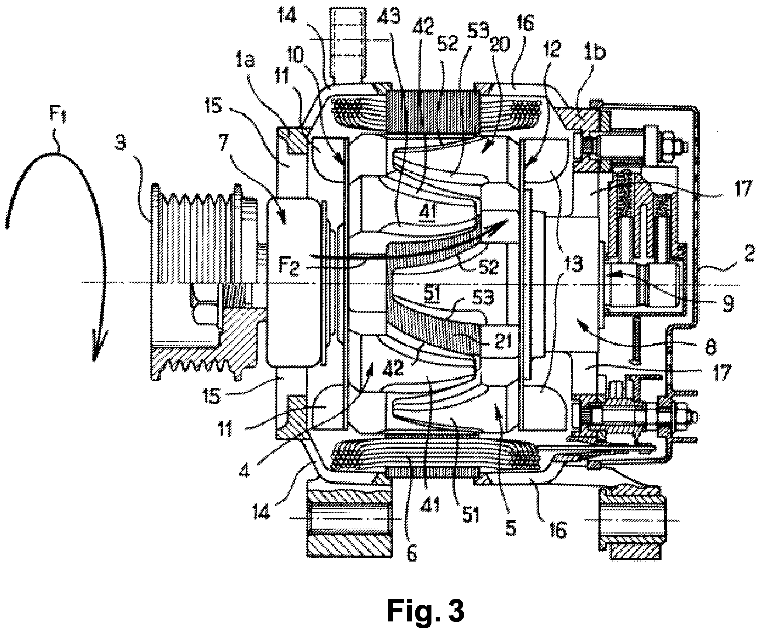

Ces paliers la, 1b sont assemblés, par exemple à l'aide de tirants, de façons à retenir entre eux à leur périphérie externe un stator 6 comprenant un corps de stator sous la forme d'un paquet de tôles portant un bobinage de stator s'étendant de part et d'autre du corps du stator et traversant celui-ci .Pour ce faire ce corps présente dans cette réalisation des encoches pour le passage des fils d'un bobinage de stator polyphasé sous la forme d'enroulements de fils conducteurs continus présentant une couche d'isolation électrique tell que de l'émail. Le carter la, 1b est conformé pour être fixé sur une partie fixe.
Les paliers la, 1b dans cette réalisation sont de forme creuse et présentent chacun à leur périphérie externe un rebord périphérique globalement de forme annulaire conformé pour retenir le corps du stator 6 ici à la faveur d'un épaulement ménagé à leur extrémité libre. Ces paliers la, 1b présentent chacun centralement un logement cylindrique pour le montage de moyens de palier ici respectivement d'un roulement à billes 7 avant et d'un roulement à billes 8 arrière recevant à rotation un arbre 9 métallique de rotor portant à solidarisation un rotor 20. L'arbre 9 traverse les paliers la, 1b, qui présentent chacun un manchon pour formation du logement respectivement du roulement 7 et du roulement 8.
La bague externe du roulement à billes 7 est en contact intime avec le bord externe du logement du palier avant la, tandis qu'une bague de dilatation est intercalée radialement entre le bord externe du logement du flasque arrière 1b et la périphérie externe de la bague externe du roulement à billes 8. Le bord externe des logements est constitué par la périphérie interne des manchons.
Les logements des paliers la, 1b sont troués centralement pour passage d'un arbre 9 dont la périphérie externe est en contact intime avec la périphérie interne des bagues internes des roulements 7, 8. Le roulement à billes avant 7 est de plus grand diamètre que celui du roulement à billes arrière 8.
Dans cette figure 2 l'arbre 9 présente un axe de symétrie axiale matérialisé à la figure 2 et les termes axial, radial et transversal seront faits en référence à cet axe constituant l'axe de rotation de l'alternateur. Il en sera de même dans les autres figures.
Le rotor 20 est un rotor à griffes qui comporte dans cette réalisation deux roues polaires 4, 5 et un noyau central implanté entre les roues polaires et portant un bobinage d'excitation 21. Le noyau central pourra être distinct des roues polaires ou être en deux parties solidaires chacune de l'une des roues polaires 4, 5. Les roues polaires 4, 5 et le noyau central sont avantageusement en matière ferromagnétique et il en est de même de l'arbre 9 sur lequel sont fixés les roues 4, 5 et le moyeu par exemple à l'aide de portions moletées de l'arbre central 9 traversant les roues 4, 5 et le moyeu.
Ces roues 4, 5 présentent chacune un flasque portant à sa périphérie externe des dents globalement d'orientation axiales, respectivement 41, 51, imbriquées les unes dans les autres en laissant entre elles des interstices de sorte que les dents d'une des roues polaires sont dirigées axialement vers le flasque de l'autre roue polaire. Un entrefer existe entre la périphérie externe du rotor 20 à griffes, constituée par la périphérie externe des dents 41, 51, et la périphérie interne du corps du stator 6 de longueur axiale inférieure ou égale à la longueur axiale du rotor 20. Dans cette réalisation les dents 41, 51 possèdent des bords d'attaque 43, 53 et de fuite 42, 52, qui sont incurvés par rapport au sens de rotation désigné par la flèche F1, de manière à provoquer une circulation de l'air selon la flèche F2 dans tous les interstices entre les dents 41, 51.
En variante les dents 41, 51, de manière classique, ne sont pas incurvées et ont une forme globalement trapézoïdale.
La face avant de la roue 4 porte à fixation un ventilateur avant 10, tandis que la face arrière de la roue 5 porte à fixation un ventilateur arrière 12 de sorte que le rotor 20 est flanqué de deux ventilateurs 10, 12 internes implantés dans le carter 1. Les ventilateurs 10, 12 présentent des pales respectivement 11, 13 et sont troués centralement pour le passage de l'arbre 9 du rotor 20. Les pales 11, 13 peuvent être conformées pour former des ventilateurs centrifuges. En variante les pales 11 du ventilateur avant 10 peuvent être conformées pour constituer un ventilateur mixte à action radiale et axiale. En variante on peut supprimer le ventilateur avant 10, le flasque et les dents 41 périphériques de la roue 4 constituant un ventilateur.
Les paliers la, 1b sont ajourés et présentent chacun dans ce mode de réalisation des entrées d'air axiales, respectivement 15,17, et des sorties d'air radiales, respectivement 14, 16 de sorte que les ventilateurs internes 10, 12 assurent une circulation de l'air interne en coopération avec les entrées 15, 17 et les sorties 14, 16 pour assurer un refroidissement des composants de l'alternateur, notamment du bobinage 21, du stator 6 et des roulements 7, 8. Les sorties d'air 14, 16 sont ménagées en majeur parties chacune respectivement dans les rebords périphériques annulaires globalement d'orientation axiale des paliers la, 1b. Les entrées d'air 15, 17 sont ménagées respectivement dans un nez avant 18 que présente le palier avant la et dans un fond d'orientation transversale du palier arrière 1b. Les logements, de forme cylindrique, des roulements 7, 8 sont ménagés centralement dans le nez 18 du palier 1 et dans le fond du palier 1b présentant chacun un manchon précité pour le logement des roulements 7, 8. Le nez du palier la se raccorde au rebord périphérique du palier la par une paroi tronconique de faible inclinaison constituant le fond du palier la. Les entrées 15 sont ménagées dans le nez 18, tandis que les sorties 14 de forme oblongue sont, pour des raisons de démoulage, ménagées en partie dans la paroi tronconique et en partie dans le rebord périphérique du palier la comme visible dans cette figure 2.
L'alternateur comporte du côté avant, à l'extérieur du carter la, 1b, une poulie 3, métallique ou en matière plastique renforcée, adjacente à l'extrémité avant du palier avant 1b.
La poulie 3, par exemple en acier ou en aluminium ou en variante en matière plastique renforcée par des fibres et/ou des charges, comporte une gorge 31 dont le fond est doté de sillons pour la réception de manière complémentaire des dents d'une courroie poly-V non représentée pour plus de clarté. Les dents et les sillons sont au nombre de six dans cette exemple de réalisation.
La poulie 3 est dotée d'une cavité (non référencée) à fond transversal pour la réception d'un écrou (non référencé) se vissant sur l'extrémité avant fileté de l'arbre de rotor 9 traversant pour ce faire une ouverture centrale que comporte le fond de la cavité de la poulie. Cette poulie 3 comporte à l'arrière un manchon (non référencé) traversé par l'arbre 9 et en contact à l'arrière avec l'extrémité avant de la bague interne du roulement à billes 7. En variante le manchon de la poulie est remplacé par une bague. Pour plus de précisions sur le montage de la poulie 3 au niveau du nez avant 18 on se reportera à la figure 3, qui est une vue de l'avant de l'alternateur de la figure 2. On voit qu'une entretoise 33, en forme de bague traversée par l'arbre 9, est intercalée axialement entre l'extrémité arrière de la bague interne du roulement 7 et l'extrémité avant de la roue polaire avant 4 fixée sur l'arbre 9 , ainsi que le moyeu, par exemple, de manière classique, à la faveur d'une portion moletée 30 de celui-ci. Ainsi la poulie 3 est solidaire en rotation et en translation de l'arbre 9. On notera que l'entretoise 33 est plus courte axialement que la bague intérieur du roulement 7.
Dans cette figure 3 la référence 31 désigne la gorge de la poulie, tandis que la référence 36 désigne la partie filetée de l'arbre de rotor 9 traversant le nez 18 du palier avant muni d'un manchon 22 dans lequel est emmanchée la bague externe du roulement 7. La bague externe du roulement 7 est calée axialement entre une pièce de maintien (non référencée) et un épaulement ménagé à l'avant du manchon 22 fermé par un voile 32 intercalé entre la poulie 3 et les billes du roulement 7 avantageusement étanche Le voile 32, de forme annulaire, est traversé par l'extrémité avant de l'arbre et constitue un voile protecteur empêchant l'introduction de l'eau ou de souillures au niveau du roulement 7. La pièce de maintien, de forme annulaire, est trouée centralement pour passage de l'entretoise et présente à sa périphérie externe des trous, par exemple au nombre de quatre, pour le passage d'organes de fixation, ici des vis (non référencées) au manchon 22 taraudé à cet effet. Le palier avant la présente donc un nez 18 doté d'un logement de montage d'un roulement à billes 7 dont la bague interne est solidaire en rotation d'un arbre de rotor 9 traversant le nez 18 du palier avant la pour porter à fixation une poulie de réception d'une courroie souple de transmission de mouvement 3.
La roue polaire arrière 5 est solidaire de l'arbre 9 également à la faveur d'une portion moletée de celui-ci. L'extrémité arrière de l'arbre 9 traverse le fond du palier arrière 1b et est de plus petit diamètre que l'extrémité avant de l'arbre 9 mécaniquement plus sollicitée du fait de la présence de la poulie 3 de réception de la courroie de transmission de mouvement. C'est pour cette raison que le roulement 7 est de plus grand diamètre que le roulement 8.
Cet arbre 9 présente à son extrémité arrière deux bagues collectrices non référencée.
Ces bagues collectrices appartiennent à un connecteur rapporté sur l'extrémité arrière de l'arbre 9 comme décrit par exemple dans le document FR 2 710 199. Ce connecteur présente ainsi un corps en matière électriquement isolante, telle que de la matière plastique, emmanché sur l'extrémité arrière de l'arbre 9 et portant les bagues collectrices. Ce corps de connecteur présente à l'avant deux bras dans chacun desquels est noyé une languette électriquement conductrice pour liaison électrique de l'une des extrémité du bobinage d'excitation 21 du rotor 20 avec la bague collectrice concernée comme mieux visible dans les figures 10 et 11 de ce document FR 2 710 199 montrant également, d'une part, la bague de dilatation intercalée radialement entre le bord externe du logement à manchon du palier arrière 1b et la périphérie externe de la bague externe du roulement arrière 8 et d'autre part, la portion moletée de l'arbre 9 pour liaison de la roue polaire arrière 5 du rotor 20 avec l'arbre 9 sachant que le ventilateur arrière 12 présente dans ce cas des pales de hauteur radiale plus importante que celles du ventilateur avant 10 moins puissant.
Le fond du palier arrière 1b porte à l'arrière (du côté opposé au rotor 20) un porte- balais (non référencé), qui appartient de manière connue à un ensemble porte-balais régulateur de tension que présente l'alternateur.
Le porte-balais présente deux balais destinés chacun à venir en contact avec une des bagues collectrice du connecteur pour alimentation électrique du bobinage 21 du rotor.
Dans la partie basse de cette figure 2 on voit la liaison de l'une des extrémités du bobinage du stator avec l'un des conducteurs électrique d'un connecteur (non référencé) appartenant dans cet exemple de réalisation à un pont redresseur de courant alternatif en courant continu porté par le fond du palier 1b du côté arrière de celui-ci. Ce pont comporte par exemple des diodes négatives emmanchées dans le fond du palier arrière 1b constituant un dissipateur de chaleur et des diodes positives montés dans un dissipateur de chaleur positif électriquement conducteur portant une borne pour liaison par un câble avec la borne positive de la batterie du véhicule automobile. Le dissipateur positif est porté à isolation électrique par le palier arrière. Les diodes pourront être montées par exemple tête bêche comme dans le document FR 2 734 425 auquel on se reportera pour plus de précisions. Ce document montre également l'ensemble régulateur de tension porte-balais En variante les queues des diodes sont orientées axialement dans le même sens.
Le nombre de paires de diodes dépend des applications, notamment du nombre de phases que comporte l'alternateur. Par exemple pour une machine triphasée il est prévu au moins trois paires de diodes. De manière connue le nombre de dents 41, 51 que présente chaque roue 4, 5 varie entre six et huit. Le nombre d'encoches du corps du stator 6 dépend du nombre de phases de l'alternateur. Ainsi pour des roues 4, 5 présentant chacune six dents il est prévu pour un alternateur triphasé 36 encoches dans le corps du stator 6. Pour des roues 4, 5 présentant chacune 7 dents et un alternateur à sept phases il est prévu 98 encoches dans le corps du stator 6. Pour des roues 4, 5 présentant chacune six dents et un alternateur à sept phases il est prévu 84 encoches dans le corps du stator 6.
Le nombre de phases de l'alternateur pourra être de 3, 5, 6 ou 7 phases, deux enroulements par phase pouvant être prévu. Les phases pourront être montées en étoile et/ou en triangle le connecteur du pont étant agencé en conséquence.
Dans cette figure 2 on voit que l'ensemble des composants électroniques (diodes, régulateur de tension) sont portés par le fond du palier arrière 1b électriquement conducteur comme le palier avant la. Ce palier 1b comporte une saillie de fixation (non référencée) sur une partie fixe, par exemple en forme de patte ou d'oreille, trouée pour le passage de moyens de fixation, tels qu'une vis du palier arrière 1b au bloc moteur du véhicule automobile. Ce palier 1b est ainsi relié électriquement à la masse et constitue un dissipateur de chaleur négatif. Il en est de même du palier avant la, qui présente deux saillies de fixation (non référencée) sur une partie fixe, par exemple en forme de pattes ou d'oreilles, trouées pour le passage de moyens de fixation, tels que des vis, du palier arrière au bloc moteur du véhicule. Le carter 1 de l'alternateur est ainsi fixé en trois points au bloc moteur. En variante les saillies fixes consistent en au moins une platine d'orientation tangentielle par rapport au rebord périphérique de l'un des paliers la, 1 dont elle est solidaire. Cette platine comporte au moins un trou, en variante deux trous, de passage pour des moyens de fixation au bloc moteur du véhicule. Deux platines diamétralement opposées peuvent être prévues sur le palier avant la. Le nombre de points de fixation dépend bien entendu des applications.
Un capot de protection 2 ajouré, par exemple en matière plastique renforcée ou en tôle, coiffe l'ensemble régulateur de tension porte-balais et le pont redresseur. Ce capot 2 est solidaire du palier arrière 1b en étant de frome creuse. Des ouvertures (non référencées) sont ménagées dans le fond du capot et dans la jupe périphérique que présente le capot 2 à sa périphérie externe pour la circulation de l'air à l'intérieur de la machine par l'intermédiaire du ventilateur arrière 12, qui refroidit ainsi l'électronique intégrée de l'alternateur et est pour cette raison plus puissant que le ventilateur 10.
De manière connue l'alternateur est implanté au voisinage de la face avant du bloc moteur du véhicule et la courroie de transmission de mouvement intervient entre une poulie menante solidaire du vilebrequin et la poulie 3 constituant une poulie menée. La poulie du vilebrequin est implantée au niveau de la face avant du bloc moteur du véhicule. La courroie peut également servir à entraîner un autre accessoire du véhicule, tel que la poulie du compresseur de climatisation ou la poulie pompe à eau, implanté de manière connue, au voisinage de la face avant du véhicule.
Lorsque le moteur thermique du véhicule tourne après son démarrage à l'aide d'un démarreur et que le bobinage d'excitation 21 du rotor 20 est alimenté électriquement via l'ensemble régulateur de tension porte-balais, le rotor 20 est magnétisé et les dents 41, 51 constituent des pôles Nord et Sud et créent un flux magnétique induit dans le stator 6. Un courant alternatif circule alors dans le bobinage du stator 6. Ce courant alternatif est alors redressé dans le pont pour produire un courant continu afin d'alimenter les consommateurs du véhicule et/ou recharger la batterie du véhicule.
En variante le pont redresseur de courant est remplacé par un onduleur comprenant par exemple des transistors du type MOSFET remplaçant les diodes comme décrit par exemple dans le document FR 2 745 444. Des moyens de suivi de la rotation du rotor, tels que, d'une part, des capteurs à effet Hall porté par un porte- capteurs en vis-à-vis d'une cible magnétique portée par exemple par le ventilateur arrière 12 ou la roue polaire 5 associé à une cible magnétique, ou d'autre part un résolveur sont associés à cet onduleur. Il est ainsi crée un alternateur réversible appelé alterno-démarreur qui permet notamment de remplacer le démarreur pour démarrer le moteur thermique, l'alternateur fonctionnant alors en mode moteur électrique pour entraîner la poulie 3, qui devient alors une poulie menante entraînant la poulie du vilebrequin. Les composants électroniques de cet onduleur pourront être alors portés par un boîtier distinct de la machine ou pourront être intégrés à la machine en étant par exemple montés au-dessus du palier arrière 1b sur une mezzanine solidaire du palier arrière 1b et appartenant au carter. L'alterno-démarreur, outre sa fonction de démarreur et sa fonction de marche arrêt du moteur thermique (appelée fonction Stop-Start en Anglais), pourra réaliser d'autres fonctions en fonction de sa puissance à savoir notamment une fonction de freinage récupératif, une fonction de charge d'une ultra capacité et une fonction d'anti calage du moteur thermique du véhicule automobile.

Un problème se pose alors lorsque l'on veut équiper cette machine électrique tournante avec un dispositif de réglage de la tension de la courroie car dans les brevets précités le palier avant présente une fonction supplémentaire de support de ce dispositif de réglage.
Dans le brevet AT130902B le palier avant n'est pas agencé pour autoriser une circulation de l'air à l'intérieur de la machine électrique tournante.
Dans le brevet EP 0 459 894 le carter à une forme compliquée compte tenu du montage (non visible) de la poulie à effectuer.
On peut songer, sans changer la taille du rotor et du stator, à rendre le flasque de support du dispositif de réglage de la tension de la courroie distinct du palier avant et à fixer ce flasque de support sur le carter de la machine électrique. On est alors amené à augmenter le porte-à faux de la poulie et donc notamment à augmenter la taille du roulement arrière ce qui a pour conséquence sur l'environnement mécanique et /ou électronique de la machine électrique tournante car il convient de ne pas augmenter la taille du roulement arrière 8 pour éviter toute interférence mécanique notamment avec le ventilateur arrière 12, ou avec le porte-capteurs, ou avec le résolveur.
Il convient également d'éviter une modification du capot protecteur et, lorsque la machine électrique tournant est dotée d'une électronique intégrée, une modification de l'interface avec l'électronique intégrée de la machine.

### Objet de l'invention

La présente invention a pour objet de concilier ces exigences contradictoires.

La présente invention a donc pour objet de créer un palier avant spécifique permettant de ne pas changer les dimensions du roulement arrière de la machine et donc de créer un palier avant spécifique autorisant une circulation de l'air à l'intérieur de la machine électrique tournante tout en permettant une fixation du dispositif de réglage de la tension de la courroie sur le carter.

Suivant l'invention, ce problème est résolu par une machine électrique tournante du type précité et comme définie en revendication 1, comportant à l'avant une poulie dotée d'une gorge et solidaire d'un arbre de rotor traversant le palier avant d'un carter configuré pour être fixé sur une partie fixe, le dit palier comprenant un fond doté d'un un nez de montage d'un roulement à billes de rotation de l'arbre et d' ouvertures d'entrée d'air délimitées par des bras reliant le nez à une bande de matière périphérique du fond, est caractérisée en ce que les bras appartiennent à une zone évasée vers l'extérieur reliant la bande de matière au nez pour décalage vers l'avant du nez , en ce qu'elle comporte un dispositif de réglage de la tension d'une courroie, ladite courroie étant reçue dans la gorge de la poulie et ledit dispositif étant fixé sur le carter, en ce que le dispositif de réglage comporte au moins un galet tendeur de la courroie et une ouverture centrale autorisant le passage de l'air à travers les ouvertures d'entrée d'air et en ce que le décalage du nez vers l'avant par rapport à la bande de matière est fonction de l'épaisseur centrale du dispositif de réglage.
Grâce à l'invention on augmente la distance entre les roulements avant et arrière ce qui permet de ménager le roulement arrière malgré les vibrations axiales et transversales transmises par la courroie.
On peut donc conserver le roulement arrière ainsi que le rotor, le stator, les composants électroniques, le capot et le ou les ventilateurs de la machine.
Le dispositif de réglage permet le passage de l'air.
En outre le ou les galets s'étendent au niveau de la face avant du moteur thermique.
Le décalage vers l'avant du nez dépend de la zone évasée.
Suivant d'autres caractéristiques prises isolément ou en combinaison :
- l'entretoise intercalée entre le rotor et la bague interne du roulement avant présente une longueur supérieure à celle de la bague interne du roulement avant ;
- le roulement avant est plus long axialement que le roulement arrière de plus petit diamètre ;
- les bras sont inclinés vers l'extérieur ;
- la zone évasée comporte des bras plus épais, qui alternent circonférentiellement avec des bras moins épais pour délimiter circonférentiellement les entrées d'air ;
- les bras plus épais sont nervurés ;
- les bras plus épais présentent un rayon spécifique de raccordement à la bande de matière ;
- les bras de la zone évasée ont la même épaisseur et délimitent circonférentiellement les entrées d'air ;
- le palier avant est de forme creuse et comporte un rebord périphérique doté de sortie d'air ;
- la bande de matière périphérique délimite le bord supérieur des ouvertures d'entrée d'air et le bord inférieur des sorties d'air ;
- le dispositif de réglage comporte deux partis coaxiales à l'axe de l'arbre de rotor et montées mobiles en rotation l'une par rapport à l'autre à l'encontre de moyens élastiques à action circonférentielle, tels qu'un ressort spiral, un ressort de torsion ou un ressort en forme d'arc de cercle ;
- les deux parties sont montées mobiles en rotation l'une par rapport à l'autre à l'encontre de moyens de frottement ;
- les deux parties coaxiales sont trouées centralement pour autoriser le passage de l'air à travers les ouvertures d'entrée d'air ;
- l'une des parties est fixe et est configurée pour être fixée sur le carter ;
- la partie fixe comporte des saillies radiales, telles que des oreilles ou des pattes, pour sa fixation sur le carter ;
- le palier avant comporte au moins une protubérance axiale pour la fixation d'une des saillies radiale de la partie fixe ;
- l'autre partie est mobile en rotation par rapport à la partie fixe et présente une saillie de support d'un galet tendeur de la courroie;
- la partie fixe présente une saillie de support d'un autre galet tendeur de la courroie ;
- la poulie est métallique ;
- la poulie métallique est revêtue localement de matière plastique ;
- la poulie est en matière plastique renforcée par exemple par des fibres et/ou des charges ;
- la poulie comporte une gorge à flancs parallèles pour réception d'une courroie souple et plate ;
- la poulie comporte une gorge de forme trapézoïdale pour réception d'une courroie souple trapézoïdale ;
- la poulie comporte une gorge à fond doté de sillons pour réception d'une courroie souple du type poly-V (Marque déposée) ;
- la poulie comporte une gorge avec un fond formant un engrenage pour réception d'une courroie souple crantée ;
- la poulie est vissée sur l'extrémité de l'arbre ;
- des moyens anti- rotation interviennent entre la poulie et l'extrémité de l'arbre ;
- la poulie est vissée et soudée sur l'extrémité de l'arbre ;
- la poulie est vissée et collée sur l'extrémité de l'arbre ;
- le rotor de la machine électrique tournante est un rotor à griffes ;
- le rotor de la machine électrique tournante est un rotor à pôles saillants ;
- le rotor à griffes ou à pôles saillants est doté d'aimants permanents ;
- le rotor de la machine électrique tournante est un rotor à aimants permanents ;
- la machine électrique tournante est un moteur électrique ;
- la machine électrique tournante est un moteur électrique dépourvu de balais et piloté par un onduleur ;
- la machine électrique tournante est un alternateur ;
- la machine électrique tournante est un alterno-démarreur ;
- la machine électrique tournante est un démarreur à courroie.

D'autres avantages apparaîtront à la lecture de la description qui va suivre de manière non limitative et ce en regard des dessins annexés

### Brève description des dessins

- la figure 1 est une vue de face d'un palier avant d'une machine électrique tournante de l'art antérieur dotée d'une poulie de réception d'une courroie et d'un dispositif de réglage de la tension de la courroie ;
- la figure 2 est une vue en coupe d'un alternateur de l'art antérieur ;
- la figure 3 est une vue partielle montrant l'avant de l'alternateur de la figure 2 ;
- la figure 4 est une vue en perspective montrant l'arrière du palier avant selon un mode de réalisation de l'invention;
- la figure 5 est une vue en perspective montrant l'avant du palier avant de la figure 4 ;
- la figure 6 est une vue en perspective d'un alternateur selon l'invention équipé du palier avant des figures 3 et 4 ;
- la figure 7 st une vue en coupe axiale de l'alternateur de la figure 6 ;
- la figure 8 est une vue en perspective complète d'une autre forme d'un alternateur selon un autre mode de réalisation de l'invention.

Dans les figures les éléments identiques ou similaires seront affectés des mêmes signes de référence.

### Descriptions d'exemples de réalisation de l'invention

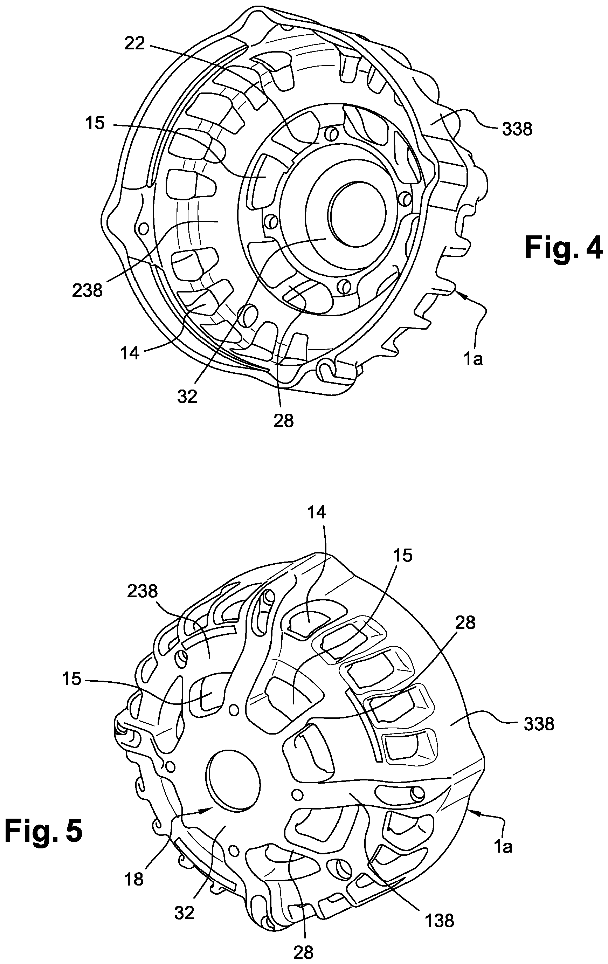

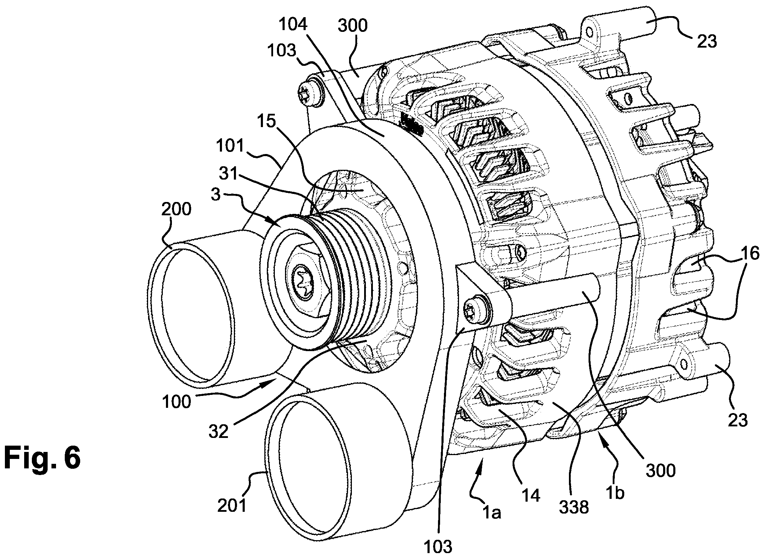

En ce qui concerne les éléments des figures 4 à 8 on se reportera à la description des figures 2 et 3 pour plus de précisions ; les éléments identiques ou similaires étant affectés des mêmes signes de référence. Les termes avant et arrière correspondent à une orientation de gauche à droite dans les figures 6 à 8.
Comme dans les figures 2 et 3, la machine électrique tournante des figures 4 à 8 comporte à l'avant une poulie 3 de réception d'une courroie souple de transmission de mouvement intervenant entre la poulie 3 et une poulie de vilebrequin implantée sur la face avant d'un moteur thermique d'un véhicule automobile. La courroie peut également servir à entraîner la poulie d'au moins un autre accessoire du véhicule automobile tel que la poulie du compresseur de climatisation du véhicule.
La machine électrique tournante des figures 4 à 8 est dotée selon l'invention d'un dispositif de réglage 100 de la tension de la courroie comprenant au moins un galet tendeur 200, 201. Le ou les galets 200, 201 sont alignés avec la poulie 3. Ce dispositif 100 intervient au niveau de la face avant du moteur thermique du véhicule relié à l'arrière à une boîte de vitesse.

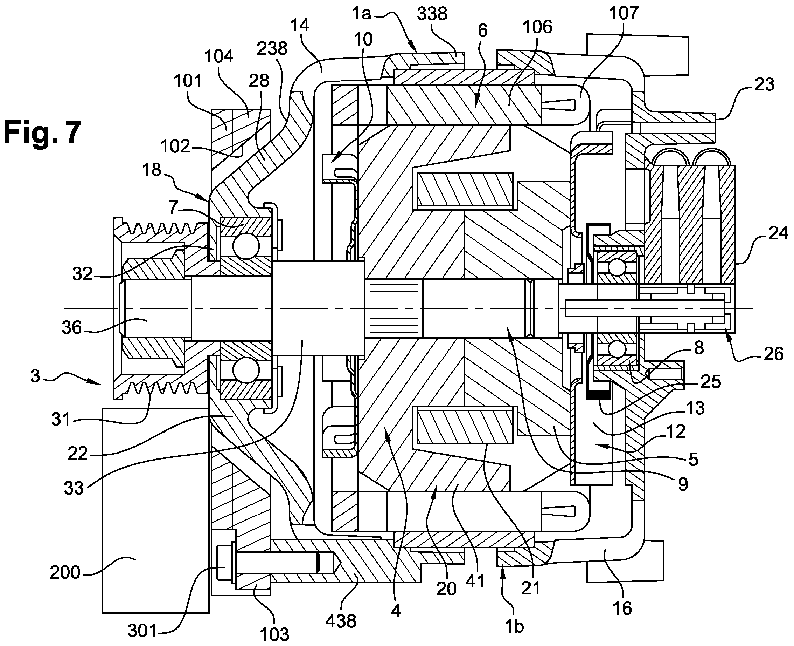

Comme précité la machine électrique tournante comprend dans les figures 4 à 8 un carter la, 1b conformé pour être fixé sur une partie fixe et sur lequel est monté d'une part, un stator 6 et d'autre part, centralement à la faveur de moyens de paliers 7, 8, tels que des roulements à billes à une ou deux rangées de billes, un arbre de rotor rotatif 9 dont l'axe de symétrie axial (matérialisé à la figure 7) défini l'axe de rotation de la machine. L'arbre 9 est solidaire d'un rotor 20 tournant à l'intérieur du stator 6. Une poulie 3 est montée à l'extérieur du carter et ce à l'une des extrémités, dite extrémité avant, de l'arbre 9 par exemple par vissage.
Le carter comprend au moins un flasque avant la adjacent à la poulie 3 et un flasque arrière 1b le plus éloignée de la poulie. Ces flasques 1a, 1b sont appelées respectivement palier avant et palier arrière. Ils sont avantageusement en matière moulable, ici en aluminium. Dans les figures 4 à 8 ils ont une forme creuse et comportent un rebord périphérique (voir figure 6, référence 338 pour le rebord du palier avant 1a).

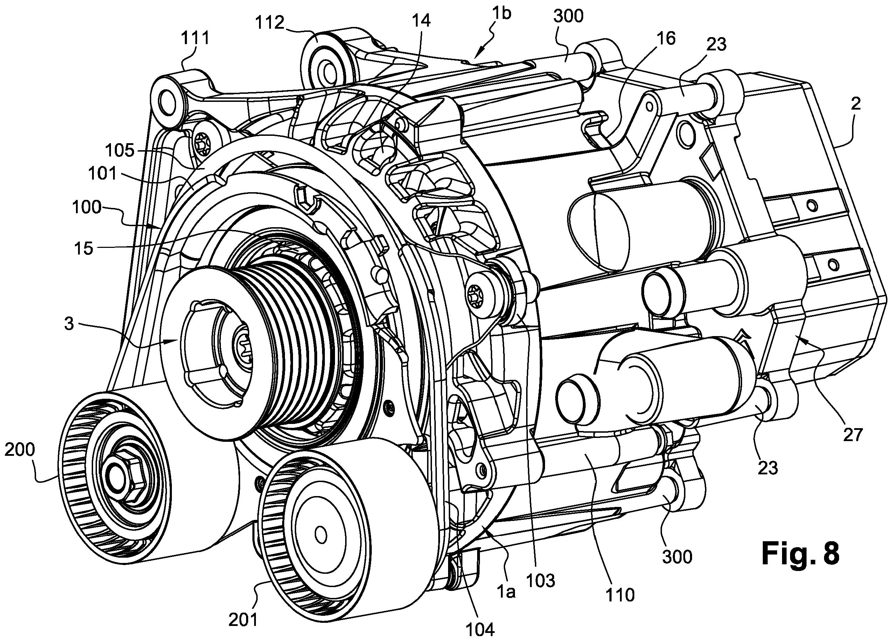

Dans les figures 4 à 8 selon l'invention on n'a représenté que les éléments nécessaires à la compréhension de l'invention.
Ainsi la courroie souple de transmission de mouvement, décrite en introduction, n'a pas été représentée, sachant que la partie supérieure de la courroie est destinée à coopérer avec le ou les galets 200, 201, tandis que la partie intérieure de la courroie est destinée à coopérer avec la gorge 31 de la poulie 3.
De même la conformation du carter pour sa fixation à une partie fixe, tels que des saillies de fixation des paliers avant la et arrière 1b à une partie fixe n'a pas été représentée dans les figures 4 à 7 car elles sont visibles à la figure 2 et également à la figure 8 (voir oreilles trouées 111 et 112 appartenant respectivement au palier avant 1a et au palier arrière 1b).
Le nombre de saillies dépend des applications. Dans la figure 8 les oreilles 111, 112, trouées pour le passage de moyens de fixation au bloc moteur du véhicule, sont alignées axialement et appartiennent à une première zone de fixation au bloc moteur du véhicule. En pratique il est prévu au moins une autre oreille de fixation appartenant au palier 1b ou au palier 1b pour formation d'une deuxième zone de fixation au bloc moteur.
En variante l'un des paliers 1a, 1b comporte une platine de fixation d'orientation tangentielle par rapport à son rebord périphérique. La platine, implantée dans la partie supérieure ou inférieure du rebord périphérique du palier 1a, 1b concerné, comporte par exemple deux trous pour le passage de moyens de fixation au bloc moteur, tel que des vis ou des tirants. Les trous s'étendent perpendiculairement à l'axe de l'arbre 9. En variante l'un des paliers la, 1b comporte au moins un canon saillant pour le passage de moyens de fixation au bloc moteur. Le ou les canons s'étendent axialement ou perpendiculairement par rapport à l'axe de symétrie axial de l'arbre 9. Ainsi un même palier 1a, 1b peut comporter deux canons en remplacement d'une platine tangentielle.
Dans une forme de réalisation le palier avant la est doté de deux platines tangentielles diamétralement opposées pour fixation du carter au bloc moteur, l'une des platines étant en variante remplacée par deux canons. Le carter est donc fixé au bloc moteur uniquement par le palier avant. 1a. L'inverse est également possible, le carter étant fixé au bloc moteur uniquement via le palier arrière 1b.
De manière citée en introduction la poulie 3 est avantageusement dans le mode de réalisation des figures 4 à 8 une poulie de réception d'une courroie du type poly-V à six dents destinées à coopérer de manière complémentaire avec les six sillons de la gorge 31 de la poulie 3 métallique, par exemple en acier ou en aluminium, identique à celle de la figure 2. La dite poulie 3 est en variante revêtue de matière plastique ou en variante être en matière plastique renforcée par des fibres et/ou des charges.
Toutes les variantes précitées d'association de la poulie avec la courroie sont bien entendu envisageables à savoir :
- poulie à gorge de réception d'une courroie plate ;
- poulie à gorge de réception d'une courroie trapézoïdale ;
- poulie à gorge de réception d'une courroie souple crantée ;

Dans tous les cas la poulie est solidaire d'une extrémité de l'arbre 9 solidaire du rotor 20 et qui traverse les paliers 1a, 1b.
La fixation de la poulie 3 à l'arbre 9 est réalisée par exemple comme à la figure 2 par vissage.
Avantageusement des moyens de blocage en rotation interviennent entre la poulie 3 et l'arbre 9, notamment lorsque la machine électrique tournante est un alterno-démarreur, pour éviter un desserrage de la poulie 3.
Par exemple la poulie 3 est soudée sur l'extrémité du filetage de l'arbre 9 comme décrit dans le document WO 2007 /099260 auquel on se reportera pour plus de précisions. Ainsi à la figure 8 on voit les empreintes que présente la poulie pour la réception de l'outil externe.
En variante on remplace le soudage par un collage. En variante l'extrémité avant de l'arbre comporte une portion tronconique destinée à coopérer avec le bord du trou central de forme complémentaire de la poulie. Une clavette peut intervenir entre l'arbre et la poulie. Bien entendu le manchon arrière de la poulie peut être remplacé de manière précitée par une bague.

Ainsi la poulie 3 reste toujours serrée notamment lorsqu'elle est menante et menée.

Dans les figures 4 à 8 le rotor 20 est un rotor à griffes doté de dents de forme trapézoïdales d'orientation axiale en variante de forme incurvée comme à la figure 2.
En variante de manière précitée :
- le rotor de la machine électrique tournante est un rotor à pôles saillants ;
- le rotor à griffes est doté d'aimants permanents entre ses dents comme décrit par exemple dans le document FR 2 784 248, le nombre de paires d'aimants étant égal ou inférieur au nombre de paires de dents ;
- le rotor à pôles saillants est doté d'aimants permanant comme décrit par exemple dans le document WO 2013/136021 auquel on se reportera ;
- le rotor de la machine électrique tournante est un rotor à aimants permanents comme décrit par exemple dans le document EP 0831 580 auquel on se reportera.

Dans ces figures 4 à 8 la machine électrique tournante est un alternateur réversible appelé alterno-démarreur. De manière précitée cet alterno-démarreur, outre sa fonction de démarreur et sa fonction de marche arrêt du moteur thermique du véhicule, pourra réaliser en fonction de sa puissance d'autres fonctions.
En variante :
- la machine électrique tournante est un moteur électrique ;
- la machine électrique tournante est un moteur électrique dépourvu de balais et piloté par un onduleur comme décrit par exemple dans le document EP 0831 580 ;
- la machine électrique est un démarreur à courroie.
- la machine électrique tournante est un alternateur.

On notera qu'un moteur électrique à rotor à aimants permanents, tel celui du document EP 0 831 580, est réversible lorsque son arbre est solidaire d'une poulie précitée de réception d'une courroie de transmission de mouvement. Ce moteur pourra donc constituer un alternateur lorsqu'il est entraîné via la courroie par la poulie du moteur thermique du vilebrequin du véhicule.
On pourra intercaler une roue libre entre l'arbre et la poulie pour transformer ce moteur électrique en démarreur. Ainsi une même courroie pourra entraîner à partir de la poulie du vilebrequin du moteur thermique du véhicule, pourra entraîner la poulie d'un démarreur à courroie et la poulie d'un alternateur classique et éventuellement la poulie du compresseur de l'installation de climatisation.

Dans tous les cas la machine électrique tournante comporte à l'avant une poulie 3 de réception d'une courroie solidaire d'un arbre 9 de rotor 20 traversant le palier avant la d'un carter configuré pour être fixé sur une partie fixe, le dit palier la comportant un nez de montage 18 d'un roulement à billes 7 de rotation de l'arbre 9 et des ouvertures d'entrée d'air 15.
Le nez 18 est de forme globalement annulaire et comporte un manchon 22 et un voile 32 comme dans les figures 2 et 3. Dans la figure 5 on voit les trous servant à la fixation de la bague de retenue (non référencée dans les figures 6 à 8) de la bague externe du roulement 7. La bague interne du roulement 7 est emmanchée sur l'arbre 9.

Dans ces figures la machine électrique tournante est équipée d'un dispositif de réglage de la tension de la courroie 100 et on voit que selon une caractéristique de l'invention on a déplacé (voir figure 4 et 5) le nez 18 de montage du roulement à billes 7 vers l'avant pour implanter le dispositif de réglage de la tension de la courroie (figures 6 à 8). Ce décalage est fonction de l'épaisseur de la partie centrale du dispositif de réglage 100, qui présente une ouverture centrale 102 (figures 6 à 8) autorisant un passage de l'air à travers les entrées 15. En d'autres termes, le nez 18 est décalé vers l'avant de manière à ce que la gorge 31 de la poulie 3 soit alignée radialement avec au moins un galet 200, 201 du dispositif de réglage 100.

En outre, la distance axiale entre le nez 18 et la bande de matière 238 est au moins égale à l'épaisseur axiale du dispositif de réglage 100 et notamment supérieure à ladite épaisseur.

Dans ces figures 4 et 5 on voit que les ouvertures d'entrée d'air 15 sont délimitées circonférentiellement par des bras 28, 138 inclinés reliant le nez 18 à une bande de matière 238 périphérique globalement de forme annulaire.

Cette bande de matière 238 est globalement d'orientation transversale par rapport à l'axe de l'arbre 9 et délimite en partie le fond du palier avant la globalement de forme annulaire. Selon une caractéristique le palier avant la comporte un fond 238, 138, 28, 18 comprenant une bande de matière périphérique 238 prolongée à l'avant par des bras 138, 28, d'une part, appartenant à une zone évasée vers l'extérieur reliant le nez 18 protubérant vers l'avant à la bande de matière 238 et d'autre part, délimitant les entrées d'air 15.

Dans les figures 4 à 8 le palier avant la est de forme creuse la et cette bande de matière 238 périphérique délimite le bord supérieur des entrées d'air 15 et le bord inférieur des sorties d'air 14 affectant le rebord périphérique 338 du palier avant la de forme creuse. Ainsi le palier avant la de forme creuse comporte un rebord périphérique 338 de forme annulaire relié à l'avant à un fond 238, 138, 28, 18 comprenant une bande de matière 238 prolongée à l'avant par des bras 138, 28 délimitant les entrées d'air 15 et reliés au nez 18 protubérant vers l'avant. Les bras 138, 28 appartiennent à une zone évasée vers l'extérieur reliant le nez 18 à la bande de matière 238 du fond du palier avant la.

Dans les figures 4 et 5 la zone évasée comporte deux séries de bras 138, 28, un bras 138 étant intercalé circonférentiellement entre deux bras 28. Les bras 138 sont plus épais que les bras 28. Ces bras épais 138 sont des bras de rigidification du fond du palier 1a et sont avantageusement nervurés comme visible à la figure 5 pour augmenter encore leur rigidité. Ils affectent la bande de matière 238 et sont prolongés vers l'extérieur pour rejoindre une protubérance radiale en forme d'oreille (non référencée) que présente le rebord 338. Cette protubérance est trouée pour le passage d'un tirant d'assemblage du palier avant 1a au palier arrière 1b. Un des tirants est visible en 110 à la figure 8.
Les bras 138 présentent un rayon spécifique de raccordement à la bande de matière 238 pour diminuer les contraintes.
Les bras 138, 18 pourront être inclinés circonférentiellement dans le sens repéré par la flèche à la figure 5 correspondant au sens de rotation de la poulie 3 lorsque celle-ci est menée (voir également flèche F1 de la figure 2).

En variante le fond du palier 1a ne présente que des bras 28 moins épais inclinés ou non circonférentiellement.
Dans une forme de réalisation (non visible) le palier avant la comporte un fond fixé directement sur le palier arrière 1b doté des sorties d'air 14. La fixation peut être réalisée à l'aide de vis.

Selon une caractéristique (figure 7) l'entretoise 33, traversée par l'arbre 9 et intercalée entre la bague intérieur du roulement 7 et la face avant de la roue polaire 4 du rotor à griffes, présente une longueur axiale supérieure à la longueur axiale de la bague interne du roulement 7. Cette caractéristique permet de décaler le nez 18 vers l'avant.

Selon une autre caractéristique (voir figure 7) la longueur axiale de l'entretoise 33 est plus grande que la longueur axiale de la bague interne du roulement arrière 8 de plus petit diamètre que le roulement avant 7.

Avantageusement la longueur axiale du roulement arrière 8 est inférieure à la longueur axiale du roulement 7.

Dans tous les cas on conserve avantageusement la structure du rotor et du stator de la machine ainsi que la taille du roulement arrière 8 et celle du ventilateur arrière 12.
L'électronique de la machine pourra être conservée, notamment le pont redresseur et/ ou les moyens de suivi de la rotation du rotor. Les ouvertures 14, 16, 17 peuvent être conservées ainsi que le capot 2 et les ventilateurs 10, 12 sachant que le ventilateur avant 10 peut être en variante un flasque ventilateur comme décrit dans le document WO 2013/136021 précité.

On appréciera que le roulement arrière 8, de plus petit diamètre que le roulement 7, est moins sollicité par rapport à une solution dans laquelle le nez 18 n'est pas décalé vers l'avant sachant que la courroie reçue dans la poulie génère des vibrations axiale et transversale.

Toutes les formes du palier la sont obtenues aisément par moulage ainsi que les moyens de fixation, décrits ci-après, que présente le carter pour la fixation du dispositif 100.

### Premier mode de réalisation

Dans les figures 4 à 7 l'alterno-démarreur diffère de celui des figures 2 et 3 par son nez 18 rallongé vers l'avant de manière précitée et son dispositif de réglage de la tension de la courroie.

Il diffère également par le fait que sont stator 6 présente un corps de stator 106 sous la forme d'un paquet de tôles, dont les encoches sont configurées pour le montage d'un bobinage 107 en forme de barres à deux couches s'tendant de part et d'autre du corps 106 du stator comme décrit par exemple dans le document EP 0 881 752, auquel on se reportera pour plus de détails. En variante il comporte plus de deux paires de couches de conducteurs.
Le nombre d'encoches du corps 106 dépend de manière précitée du nombre de phase et du nombre de dents de ses roues polaires 4, 5, qui pourra varier de 6 à 8 par roue polaire 4, 5.

La liaison de l'arbre de rotor 9 avec les roues polaires est également différente, le moyeu du rotor à griffes étant en deux parties appartenant chacune à l'une des roues polaire 4, 5 comme visible à la figure 7. Cette liaison est réalisée ici par sertissage, l'arbre 9 présentant une zone de centrage et deux zones de sertissage disposées de part et d'autre de la zone de centrage pour fixation des extrémités respectivement avant et arrière des roues 4, 5 par sertissage comme décrit dans le brevet EP 2 067 238 auquel on se reportera. A la lumière de ce document on voit que des aimants permanents peuvent être intercalés circonférentiellement entre deux dents consécutives d'une roue 4 et d'une roue 5, pour augmenter la puissance de la machine.
Bien entendu l'assemblage des roues 4, 5 est en variante réalisé de manière précitée à l'aide de portions moletées de l'arbre 9.

Une autre différence porte sur le fait que l'électronique de la machine comporte un onduleur, monté sur une mezzanine du carter (référencée en 27 à la figure 8) montée au-dessus du fond du palier arrière 1b à l'aide de colonnettes 23 comme décrit par exemple dans le document WO 2006/129030 et dans le document WO 2004/040738 auxquels on se reportera.
A la figure 7 on a référencé en 26 le collecteur et en 24 l'ensemble porte-balais régulateur de tension précités en référence aux figures 2 et 3. La référence 25 désigne la cible magnétique que présente de manière précitée l'alterno-démarreur pour le suivi de la rotation du rotor. Pour plus de précisions on se reportera par exemple au document WO 01/69762.
Dans cette réalisation le connecteur 26 et le porte balais sont intercalés entre le fond du palier arrière 1b et la mezzanine.
Dans le mode de réalisation de la figure 8 on voit des tubulures (non référencées) pour le refroidissement de la mezzanine 27 à l'aide d'un liquide de refroidissement

Dans ce mode de réalisation le dispositif de réglage 100 comporte deux parties coaxiales 101, 104 montées mobiles en rotation l'une par rapport à l'autre à l'encontre de moyens élastiques (non visibles) à action circonférentielle et avantageusement de moyens de frottement. Ces parties 101, 104 présentent un axe confondu avec celui de l'arbre 9 et ont donc le même axe que celui de l'arbre 9.
Ces parties 101, 104 sont trouées centralement et portent chacune un galet 200, 201 tendeur de la courroie à la faveur chacun d'une saillie (non référencée). Les trous des parties ont un diamètre autorisant le passage de l'air à travers les entrées d'air.
Les parties 101, 104 sont avantageusement en tôle pour réduction de l'épaisseur du dispositif 100. L'alésage interne 102 des parties 101, 104 est de forme tronconique adaptée à la zone évasée des bras 138, 28, un jeu existant entre les bras 138, 28 et le bord externe de l'alésage 102 pour introduction de l'air dans le carter 1a, 1b de l'alterno-démarreur, qui est à ventilation interne comme dans les figure 2 et 3.
Le décalage axial du nez 18 dépend donc de l'épaisseur de la partie centrale des parties 101, 104 et donc de la partie centrale du dispositif 100 trouée centralement. C'est la zone évasée qui permet ce décalage du nez 18 vers l'avant.

Ainsi suivant l'invention une machine électrique tournante du type précité comportant à l'avant une poulie 3 dotée d'une gorge 31 et solidaire d'un arbre 9 de rotor 20 traversant le palier avant la d'un carter configuré pour être fixé sur une partie fixe, le dit palier la comprenant un fond 238, 138, 28, 18 doté d'un un nez de montage 18 d'un roulement à billes 7 de rotation de l'arbre 9 et d' ouvertures d'entrée d'air 15 délimitées par des bras 138, 28 reliant le nez 18 à une bande de matière périphérique 238 du fond, est caractérisée en ce que les bras 138, 28 appartiennent à une zone évasée vers l'extérieur reliant la bande de matière 238 au nez 18 pour décalage vers l'avant du nez 18, en ce qu'elle comporte un dispositif de réglage de la tension 100 d'une courroie reçu dans la gorge 31 de la poulie 3 et fixé sur le carter 1a, 1b et en ce que le dispositif de réglage 100 comporte au moins un galet 200, 201 de la courroie et une ouverture centrale autorisant le passage de l'air à travers les ouvertures d'entrée d'air 15 et en ce que le décalage du nez 18 vers l'avant est fonction de l'épaisseur centrale du dispositif de réglage 100

La partie 104 présente à sa périphérie externe des saillies radiales 103, ici des oreilles radiales, trouées 103 pour sa fixation au carter 1a, 1b, qui dans un autre mode de réalisation pourra être en trois parties assemblée à savoir un palier avant la, un palier arrière 1b et une partie intermédiaire intercalée axialement entre les paliers 1a et 1b et portant le stator. Cette partie intermédiaire pourra en variante porter l'électronique de la machine à la faveur d'une platine. En variante l'électronique de la machine pourra être portée par une platine du palier arrière 1b. En variante les saillies 103 consistent en des pattes radiales.

Dans les figures 4 à 8 il est prévu trois oreilles radiales 103 fixées sur des protubérances du carter de la machine.

Dans le mode de réalisation des figures 4 à 7 le palier la comporte une protubérance axiale 438 pour fixation à l'aide d'une vis 301 d'un oreille radiale 103 sur une protubérance axiale 438 que présente le rebord périphérique 338 à sa périphérie externe
Les deux autres oreilles 103 sont reliées par des tirants à des oreilles saillantes que présente la mezzanine. On se reportera pour ce faire à la figure 8 montrant en 300 l'un des tirants et l'une des oreilles de la mezzanine. En variante comme visible à la figure 8 l'une des oreilles peut être fixée par une vis à une oreille radiale du palier avant la de la mezzanine.

En variante la partie 104 est fixée via ses trois oreilles 103 sur des protubérances axiales du type de la protubérance 438 que présente le palier 1a. Dans ce cas le palier la est doté avantageusement de manière précitée de deux platines, dont l'une pourra être remplacée par deux canons.
Le nombre d'oreilles 103 dépend des applications et pourra être supérieur à trois.
Dans tous les cas la partie 104 est une partie fixe, tandis que la partie 101 est mobile en rotation par rapport à la partie fixe 104 et constitue le bras de réglage du dispositif 100.

La partie 104 porte un galet tendeur 201 de la courroie à la faveur d'une saillie (non référencée), qui est dans cette forme de réalisation globalement en forme d'oreille.

De même la partie 101 porte un galet tendeur 200 de la courroie à la faveur d'une saillie (non référencée), qui est dans cette forme de réalisation globalement en forme d'oreille. Les parties 101, 104 sont globalement de forme annulaire et présentent chacune une saillie de support d'un galet respectivement 200, 201.
Les galets 200, 201 sont implantés de part et d'autre de la poulie 3 en-dessous de celle-ci comme visible dans les figures 6 et 8. Bien entendu les galets 200, 201 sont alignés axialement avec la poulie 3. Le galet 200 est sollicité lorsque l'alterno-démarreur est en mode alternateur, tandis que le galet 201 est sollicité en mode alternateur. La courroie fait une boucle au niveau des galets 200, 201 et de la poulie 3. Plus précisément la partie supérieure de la courroie, en prise avec la poulie du vilebrequin, arrive en contact avec le galet 200, puis vient par sa partie inférieure en contact avec le fond de la gorge 31 et enfin vient en contact avec le galet 201 avant de s'enrouler sur la poulie du vilebrequin en passant éventuellement par la poulie du compresseur de climatisation à la sortie du galet 201.

Le galet 200 peut se déplacer sous l'action des moyens élastiques à action circonférentielle agissant entre les parties 101, 104 pour tendre la courroie et régler la tension de celle-ci à son optimum pour notamment éviter un glissement de celle-ci et filtrer les vibrations de manière précitée. La partie 101 est donc une partie mobile de réglage.

Les galets 200, 201 sont montés tournant respectivement sur la partie 101 et sur la partie 104 à l'aide d'un pivot, tel qu'un boulon comme dans le document EP 0 459 894 précité. Un tel boulon est visible à la figure 8. Un roulement pourra être intercalé entre le pivot et le bord interne du galet 200, 201 comme décrit dans le document EP 0 459 894.

Les moyens élastiques à action circonférentielle pourront être un ressort spiral comme dans le document EP 0 459 894 auquel on se reportera, l'une des extrémités du ressort spirale étant solidaire en rotation de la partie 104 fixe et l'autre extrémité du ressort spirale solidaire en rotation de la partie mobile 101. Le montage rotatif de la partie mobile 101 pourra être réalisé comme dans le document EP 0 459 894 auquel on se reportera. Les moyens de frottement, tel qu'une rondelle de frottement, pourront être intercalés entre la face externe de la partie 101 et la face interne de l'extrémité rabattue de la partie fixe 104 en étant collé sur la partie 101 ou sur l'extrémité rabattue de la partie 104.

En variante les moyens élastiques à action circonférentielle consistent en un ressort de torsion. Comme décrit par exemple dans le modèle d'utilité CN 203431112U auquel on se reportera. Dans ce cas la partie 104 pourra présenter un manchon interne de centrage pour la partie 101 avec intervention de moyens de frottement. Le diamètre interne du manchon est dimensionné pour passage de l'air à travers les ouvertures 15.

### Deuxième mode de réalisation

Dans le document EP 0 459 894 il est prévu une version avec un ressort courbe intervenant entre les deux parties du dispositif de réglage. Un tel ressort peut être monté entre les deux parties 101, 104. Dans ce mode de réalisation de la figure 8 le ressort courbe est remplacé par une lame 105 en forme d'arc de cercle intervenant entre les deux parties 101, 102. Les extrémités de ce ressort sont fixées sur les parties 101 et 104 au voisinage des galets 200, 201. Avantageusement les extrémités du ressort 105 sont en forme de boucles enroulées chacune autour du pivot, tel qu'un boulon, concerné des galets 200, 201. Les pivots sont alors prolongés et chaque boucle est intercalée entre la partie et le galet concerné. Il est ainsi formé un pendule intervenant entre les deux parties 101 et 102.
Ce pendule permet d'absorber les pics de tension dans la courroie et modère les glissements de la courroie. Il permet de diminuer la tension de la courroie et augmente la durée de vie du roulement avant 7.
Dans cette variante la partie fixe pourra présenter centralement un manchon de centrage de la partie mobile 101 et une rondelle arrière de montage d'une rondelle de frottement intervenant entre la partie fixe 104 et une collerette interne que présente la partie mobile 101.

On notera que le rotor de cette réalisation pourra être un rotor du type de celui décrit dans le document WO 2013/136021 précité.

### Troisième mode de réalisation

L'invention est applicable à l'alternateur des figures 2 et 3. Dans ce cas on configure le palier avant la comme dans les figures 4 et 5 et leur variante et on supprime le galet 201 associé à la partie fixe 104. Bien entendu toutes les variantes de structure des figures 4 à 8 sont applicables à l'alternateur des figures 2 et 3 modifié

### Autres formes de réalisations

On peut inverser les structures. Ainsi la partie fixe 104 pourra être fixée sur des protubérances axiales que présente la bande de matière 238, la partie mobile 101 étant intercalée axialement entre le palier avant la et la partie fixe 104. Dans ce cas il faut monter le dispositif 100 après la courroie.

Dans tous les cas le dispositif 100 comporte deux parties coaxiales 101, 104 montées mobiles en rotation l'une par rapport à l'autre à l'encontre de moyens élastiques à action circonférentielle et le décalage du nez 18 dépend de l'épaisseur centrale du dispositif 100 troué centralement pour passage de l'air à travers les ouvertures d'entrée d'air 15. L'axe des parties 101, 104 correspond à l'axe de l'arbre 9. La solution libère de la place au niveau de la périphérie externe du palier la.

L'ouverture centrale 102 du dispositif pourra être circulaire, le diamètre interne de cette ouverture permettant un passage de l'air à travers les ouvertures d'entrée d'air 15.

Le stator de la machine pourra comporter des dents sur lesquelles sont monté des bobines reliées dont certaines sont reliées entre elles pour former l'une des phases de la machine électrique tournante. Pour plus de précisions on se reportera par exemple au document WO 2007/031679 décrivant le nombre de dents
Les dents pourront être rapportées sur une culasse.
Le bobinage du stator pourra comporter deux ou plusieurs couches en fil continu au lieu de barres.
La machine électrique tournante pourra comporter un seul ventilateur avant 10 et un palier avant doté d'ouvertures 14, 15, l'autre palier étant refroidit par une circulation de liquide, tel que l'eau de refroidissement du moteur thermique du véhicule à la faveur d'un canal qu'il présente à cet effet. Le palier avant la peut donc être moins profond, voir ne comporter qu'un fond, les ouvertures de sorties d'air 14 étant réalisées dans le palier arrière 1b

Les ventilateurs 10 et 12 pourront avoir les formes précitées notamment en introduction.

Un seul ventilateur peut être prévu à savoir un ventilateur arrière 12 qui aspire l'air. Dans ce cas le palier la pourra comporter uniquement des entrées d'air 15.

### Applications

De manière précitée :
- la machine électrique tournante est un moteur électrique ;
- la machine électrique tournante est un moteur électrique dépourvu de balais et piloté par un onduleur ;
- la machine électrique tournante est un alternateur ;
- la machine électrique tournante est un alterno-démarreur ;
- la machine électrique tournante est un démarreur à courroie.

## Revendications

1. Machine électrique tournante comportant :
- un stator (6), un rotor (20) tournant à l'intérieur du stator (6), un arbre (9) solidaire du rotor (20), l'arbre présentant un axe de symétrie constituant l'axe de rotation, et des roulements (7, 8) avant et arrière recevant à rotation l'arbre (9),
- un carter conformé pour être fixé sur une partie fixe, dans lequel carter est monté le stator (6), ledit carter comprenant un palier avant (1a), et un palier arrière (1b),
- la machine comportant aussi, montée à l'avant et à l'extérieur du carter une poulie (3), dotée d'une gorge (31) et solidaire de l'arbre (9) de rotor (20) traversant le palier avant (1a), ledit palier avant (1a) comprenant un fond (238, 138, 28, 18) doté d'un nez de montage (18) du roulement à billes avant (7) et d'ouvertures d'entrée d'air (15) délimitées par des bras (138, 28) reliant le nez (18) à une bande de matière périphérique (238) du fond,
- la machine comportant aussi un dispositif de réglage de la tension (100) d'une courroie de transmission de mouvement engageant la gorge (31) de la poulie (3), ledit dispositif de réglage de la tension (100) étant fixé sur le palier avant (la) du carter et comportant au moins un galet (200, 201) tendeur de la courroie et une ouverture centrale (102) autorisant le passage de l'air à travers les ouvertures d'entrée d'air (15), **caractérisée en ce que**
- les bras (138, 28) appartiennent à une zone évasée vers l'extérieur du carter reliant la bande de matière (238) au nez (18) pour décalage vers l'avant du nez (18), et **en ce que**
- le décalage du nez (18) vers l'avant, par rapport à la bande de matière (238), est fonction de l'épaisseur centrale du dispositif de réglage de tension (100) de la courroie et réalisé de manière à ce que la gorge (31) soit alignée radialement avec le ou les galets (200, 201) du dispositif de réglage (100).

2. Machine électrique tournante selon la revendication 1, dans laquelle une entretoise (33) est intercalée entre le rotor (20) et la bague interne du roulement avant (7), ladite entretoise (33) présentant une longueur supérieure à celle de la bague interne du roulement avant (7).

3. Machine selon les revendications 1 ou 2, dans laquelle la zone évasée comporte des bras plus épais (138), qui alternent circonférentiellement avec des bras (28) moins épais pour délimiter circonférentiellement les entrées d'air (15).

4. Machine selon la revendication 3, dans laquelle les bras plus épais (138) sont nervurés.

5. Machine selon la revendication 4, dans laquelle les bras plus épais (138) présentent un rayon spécifique de raccordement à la bande de matière (238).

6. Machine selon les revendications 1 ou 2, dans laquelle la zone évasée comporte des bras (28) de même épaisseur pour délimiter circonférentiellement les entrées d'air (15).

7. Machine selon l'une quelconque des revendications 1 à 6, dans laquelle le dispositif de réglage (100) comporte deux parties coaxiales (101, 104) à l'axe de l'arbre (9) de rotor et montées mobiles en rotation l'une par rapport à l'autre à l'encontre de moyens élastiques à action circonférentielle, tels qu'un ressort spiral, un ressort de torsion ou un ressort en forme d'arc de cercle.

8. Machine selon la revendication 7, dans laquelle les deux parties (101, 104) sont montées mobiles en rotation l'une par rapport à l'autre à l'encontre de moyens de frottement ;

9. Machine selon les revendications 7 ou 8, dans laquelle les deux parties coaxiales (101, 104) sont trouées centralement pour autoriser le passage de l'air à travers les ouvertures d'entrée d'air (15) et dans laquelle l'une des parties est fixe et est configurée pour être fixée sur le carter.

10. Machine selon la revendication 9, dans laquelle la partie fixe (104) comporte des saillies (103) radiales, telles que des oreilles ou des pattes, pour sa fixation sur le carter et dans laquelle le palier avant (la) comporte au moins une protubérance axiale (438) pour la fixation d'une des saillies radiale (103) de la partie fixe (104).

11. Machine selon l'une quelconque des revendications 7 à 10 dans laquelle l'autre partie (101) est mobile en rotation par rapport à la partie fixe (104) et présente une saillie de support d'un galet (200) tendeur de courroie.

12. Machine selon la revendication 11, dans laquelle la partie fixe (104) présente une saillie de support d'un autre galet (204) tendeur de courroie.

13. Machine électrique selon l'une quelconque des revendications précédentes consistant en un alterno-démarreur.

14. Machine électrique selon l'une quelconque des revendications précédentes, dans laquelle la poulie (3) est vissée sur l'extrémité avant de l'arbre avec intervention de moyens de blocage en rotation.

## Patentansprüche

1. Drehende elektrische Maschine, die beinhaltet:
- einen Stator (6), einen innerhalb des Stators (6) drehenden Rotor (20), eine mit dem Rotor (20) fest verbundene Welle (9), wobei die Welle eine die Drehachse bildende Symmetrieachse aufweist, und vordere und hintere Wälzlager (7, 8), welche die Welle (9) drehbar aufnehmen,
- ein Gehäuse, das dazu ausgebildet ist, an einem feststehenden Teil befestigt zu werden, wobei in dem Gehäuse der Stator (6) montiert ist, wobei das Gehäuse ein vorderes Lagerschild (1a) und ein hinteres Lagerschild (1b) umfasst,
- wobei die Maschine auch, an der Vorderseite und außerhalb des Gehäuses montiert, eine Scheibe (3) beinhaltet, die mit einer Rille (31) versehen ist und die mit der das vordere Lagerschild (1a) durchquerenden Welle (9) des Rotors (20) fest verbunden ist, wobei das vordere Lagerschild (1a) einen Boden (238, 138, 28, 18) umfasst, der mit einer Montagenase (18) für das vordere Kugellager (7) versehen ist und mit Lufteinlassöffnungen (15), die durch Arme (138, 28) begrenzt werden, welche die Nase (18) mit einem Umfangsmaterialstreifen (238) des Bodens verbinden,
- wobei die Maschine auch eine Spannungseinstellvorrichtung (100) für einen Antriebsriemen beinhaltet, der die Rille (31) der Scheibe (3) eingreift, wobei die Spannungseinstellvorrichtung (100) am vorderen Lagerschild (1a) des Gehäuses befestigt ist und mindestens eine Riemenspannrolle (200, 201) beinhaltet und eine zentrale Öffnung (102), die den Durchgang der Luft durch die Lufteinlassöffnungen (15) zulässt, **dadurch gekennzeichnet, dass**
- die Arme (138, 28) zu einem nach außerhalb des Gehäuses aufgeweiteten Bereich gehören, der den Materialstreifen (238) mit der Nase (18) verbindet, zum Versetzen der Nase (18) nach vorn, und dass
- das Versetzen der Nase (18) nach vorn in Bezug auf den Materialstreifen (238) von der zentralen Dicke der Spannungseinstellvorrichtung (100) für den Riemen abhängig ist und so ausgeführt ist, dass die Rille (31) radial mit der oder den Rollen (200, 201) der Einstellvorrichtung (100) fluchtet.

2. Drehende elektrische Maschine nach Anspruch 1, bei der ein Distanzstück (33) zwischen den Rotor (20) und den Innenring des vorderen Wälzlagers (7) gesetzt ist, wobei das Distanzstück (33) eine Länge aufweist, die größer als die des Innenrings des vorderen Wälzlagers (7) ist.

3. Maschine nach den Ansprüchen 1 oder 2, bei welcher der aufgeweitete Bereich dickere Arme (138) beinhaltet, die umfangsmäßig mit weniger dicken Armen (28) abwechseln, um die Lufteinlässe (15) umfangsmäßig zu begrenzen.

4. Maschine nach Anspruch 3, bei der die dickeren Arme (138) gerippt sind.

5. Maschine nach Anspruch 4, bei der die dickeren Arme (138) einen spezifischen Übergangsradius zum Materialstreifen (238) aufweisen.

6. Maschine nach den Ansprüchen 1 oder 2, bei welcher der aufgeweitete Bereich Arme (28) von gleicher Dicke beinhaltet, um die Lufteinlässe (15) umfangsmäßig zu begrenzen.

7. Maschine nach einem der Ansprüche 1 bis 6, bei der die Einstellvorrichtung (100) zwei Teile (101, 104) beinhaltet, die koaxial zur Achse der Rotorwelle (9) sind und zueinander drehbeweglich gegen umfangsmäßig wirkende elastische Mittel wie eine Spiralfeder, eine Torsionsfeder oder eine kreisbogenförmige Feder montiert sind.

8. Maschine nach Anspruch 7, bei der die beiden Teile (101, 104) zueinander drehbeweglich gegen Reibmittel montiert sind.

9. Maschine nach den Ansprüchen 7 oder 8, bei der die beiden koaxialen Teile (101, 104) zentral gelocht sind, um den Durchgang der Luft durch die Lufteinlassöffnungen (15) zuzulassen, und bei der einer der Teile feststehend ist und dazu ausgelegt ist, am Gehäuse befestigt zu werden.

10. Maschine nach Anspruch 9, bei welcher der feststehende Teil (104) radiale Ansätze (103) wie Lappen oder Laschen zu seiner Befestigung am Gehäuse beinhaltet und bei der das vordere Lagerschild (1a) mindestens einen axialen Vorsprung (438) zum Befestigen eines der radialen Ansätze (103) des feststehenden Teils (104) beinhaltet.

11. Maschine nach einem der Ansprüche 7 bis 10, bei welcher der andere Teil (101) in Bezug auf den feststehenden Teil (104) drehbeweglich ist und einen Ansatz zum Haltern einer Riemenspannrolle (200) aufweist.

12. Maschine nach Anspruch 11, bei welcher der feststehende Teil (104) einen Ansatz zum Haltern einer weiteren Riemenspannrolle (204) aufweist.

13. Elektrische Maschine nach einem der vorhergehenden Ansprüche, die in einem Startergenerator besteht.

14. Elektrische Maschine nach einem der vorhergehenden Ansprüche, bei der die Scheibe (3) unter Einsatz von Drehsicherungsmitteln an das vordere Ende der Welle geschraubt ist.

## Claims

1. Rotary electric machine having:
- a stator (6), a rotor (20) rotating inside the stator (6), a shaft (9) secured to the rotor (20), the shaft having an axis of symmetry that constitutes the axis of rotation, and front and rear rolling bearings (7, 8) rotationally receiving the shaft (9),
- a casing shaped so as to be fastened to a fixed part, in which casing the stator (6) is mounted, said casing comprising a front bearing (1a) and a rear bearing (lb),
- the machine also having, mounted at the front of and outside the casing, a pulley (3), provided with a groove (31) and secured to the rotor (20) shaft (9) passing through the front bearing (1a), said front bearing (la) comprising an end wall (238, 138, 28, 18) provided with a nose (18) for mounting the front ball bearing (7) and with air inlet openings (15) delimited by arms (138, 28) connecting the nose (18) to a peripheral strip of material (238) of the end wall,
- the machine also having a device (100) for adjusting the tension of a belt for transmitting movement that engages the groove (31) of the pulley (3), said device (100) for adjusting the tension being fastened to the front bearing (1a) of the casing and having at least one roller (200, 201) for tensioning the belt and a central opening (102) allowing air to pass through the air inlet openings (15), **characterized in that**
- the arms (138, 28) belong to a zone that is flared towards the outside of the casing and connects the strip of material (238) to the nose (18) so as to shift the nose (18) forwards, and **in that**
- shifting the nose (18) forwards, with respect to the strip of material (238), depends on the central thickness of the device (100) for adjusting the tension of the belt and is realized such that the groove (31) is radially aligned with the one or more rollers (200, 201) of the adjustment device (100).

2. Rotary electric machine according to Claim 1, wherein a spacer (33) is interposed between the rotor (20) and the internal ring of the front rolling bearing (7), said spacer (33) having a length longer than that of the internal ring of the front rolling bearing (7).

3. Machine according to Claim 1 or 2, wherein the flared zone has thicker arms (138), which alternate circumferentially with thinner arms (28) so as to circumferentially delimit the air inlets (15).

4. Machine according to Claim 3, wherein the thicker arms (138) are ribbed.

5. Machine according to Claim 4, wherein the thicker arms (138) have a specific radius of connection to the strip of material (238).

6. Machine according to Claim 1 or 2, wherein the flared zone has arms (28) of the same thickness so as to circumferentially delimit the air inlets (15).

7. Machine according to any one of Claims 1 to 6, wherein the adjustment device (100) has two parts (101, 104) that are coaxial with the rotor shaft (9) and mounted so as to be able to move in rotation with respect to one another counter to circumferentially acting elastic means, such as a spiral spring, a torsion spring or a spring in the shape of an arc of a circle.

8. Machine according to Claim 7, wherein the two parts (101, 104) are mounted so as to be able to move in rotation with respect to one another counter to friction means.

9. Machine according to Claim 7 or 8, wherein the two coaxial parts (101, 104) are centrally holed so as to allow air to pass through the air inlet openings (15) and wherein one of the parts is fixed and is configured to be fastened to the casing.

10. Machine according to Claim 9, wherein the fixed part (104) has radial protrusions (103), such as lugs or tabs, for fastening it to the casing, and wherein the front bearing (1a) has at least one axial protuberance (438) for fastening one of the radial protrusions (103) of the fixed part (104) .

11. Machine according to any one of Claims 7 to 10, wherein the other part (101) is able to move in rotation with respect to the fixed part (104) and has a protrusion for supporting a belt tensioning roller (200).

12. Machine according to Claim 11, wherein the fixed part (104) has a protrusion for supporting another belt tensioning roller (204).

13. Electric machine according to any one of the preceding claims, consisting of an alternator-starter.

14. Electric machine according to any one of the preceding claims, wherein the pulley (3) is screwed to the front end of the shaft with intervention of rotation-blocking means.
